# EUROPEAN PATENT APPLICATION

(11) **EP 4 033 315 A1**
(43) Date of publication of application: **27.07.2022**
(21) Application number: 20882012.6
(22) Date of filing: 14.10.2020
(51) Int. Cl.: G05B 19/418

(54) **GOODS PROCESSING SYSTEM AND GOODS PROCESSING METHOD**

(30) Priority: 29.10.2019 CN 201911037866
(71) Applicant: Beijing Geekplus Technology Co., Ltd., Chaoyang District Beijing 100102 (CN)
(72) Inventor: LIU, Kai, Beijing 100102 (CN); WANG, Mengdi, Beijing 100102 (CN); LAN, Qiufeng, Beijing 100102 (CN)
(74) Representative: KIPA AB
(86) International application number: PCT/CN2020/120912
(87) International publication number: WO 2021/082924

(57) **Abstract**

Provided are a goods processing system and a goods processing method: as a self-driven mobile device can move to a picking station on the basis of a first navigation path sent by a controller (S302), the inventory goods stored at the picking station only need to be placed onto the self-driven mobile device, and the self-driven mobile device can then move to a downstream station on the basis of a second navigation path sent by the controller, and deliver the carried inventory goods to a corresponding container (S303). Thus, the accurate delivery of the inventory goods to the corresponding container can be effectively ensured and the goods sorting efficiency can be effectively increased.

## Description

The present application claims priority to Chinese Patent Application No. 201911037866.9, entitled "Goods processing system and goods processing method" and filed with SIPO on October 29, 2019, which is incorporated herein by reference in its entirety.

### FIELD OF THE TECHNOLOGY

The present application is directed to the field of robotics technology, and in particular, to a goods processing system and a goods processing method.

### BACKGROUND OF THE DISCLOSURE

At present, automated transferring devices such as Automated Guided Vehicles (AGVs) have been widely used in warehousing, logistics and other fields to realize automated transportation of goods.

The warehouse order processing usually involves picking and sorting. Picking mainly refers to fetching goods involved in multiple orders from each storage area in the warehouse by the AGVs and uniformly delivering the goods to designated sorting location. Sorting mainly refers to sorting the goods required for respective orders out of the goods carried in the AGVs according to the goods involved in respective orders, and transferring the goods to containers corresponding to respective orders. Later, the goods in the containers corresponding to respective orders can be packed separately and delivered according to the respective orders.

With the enrichment and popularization of various shopping modes and shopping channels, the number of warehouse orders has greatly increased. How to effectively improve the efficiency of goods processing is an urgent problem to be solved.

### SUMMARY

Embodiments of the disclosure provide a goods processing system and a goods processing method for resolving the problem that the sorting efficiency is low and it is prone to place goods into containers corresponding to other orders.

In a first aspect, a goods processing system includes a controller and at least one self-driven mobile device configured for wirelessly communicating with the controller, the self-driven mobile device is provided with at least one carrier assembly;
the self-driven mobile device is configured to move, according to a first navigation path planned by the controller, to a picking station to which an order task belongs; to carry, through the carrier assembly, storage goods picked from a storage container by a picking party; and to transport the storage goods from the picking station to a downstream working point according to a second navigation path planned by the controller;
the controller being configured to assign for an order a self-driven mobile device for processing the order task as a target self-driven mobile device; to plan, for the target self-driven mobile device, the first navigation path from an original position of the target self-driven mobile device to the picking station to which the order belongs, according to a location of the picking station; to plan, for the target self-driven mobile device, the second navigation path from the picking station to the downstream working point according to a location of the downstream working point; and to send the first navigation path and the second navigation path to the target self-driven mobile device.

In a second aspect, embodiments of the disclosure further provide a goods processing method, including:
assigning, for each order, a self-driven mobile device for processing an order task from respective self-driven mobile devices, as a target self-driven mobile device;
planning, for the target self-driven mobile device,
a first navigation path from an original position of the target self-driven mobile device to a picking station to which the order belongs, according to a location of the picking station;
planning, for the target self-driven mobile device, a second navigation path from the picking station to a downstream working point according to a location of the downstream working point; and
sending the first navigation path and the second navigation path to the target self-driven mobile device, so that the target self-driven mobile device moves, according to the first navigation path, from the original position to the location where the picking station is located, and moves from the picking station to the downstream working point according to the second navigation path.

In the goods processing system provided in the disclosure, the self-driven mobile device can move to the picking station according to the first navigation path sent by the controller; once the storage goods stored at the picking station are placed on the self-driven mobile device, the self-driven mobile device can move to the downstream working point according to the second navigation path sent by the controller, and deliver the carried storage goods to corresponding container(s). This not only can effectively ensure the accurate delivery of the storage goods into the corresponding container(s), but also can effectively improve the sorting efficiency of the goods. The content of the summary is only an overview of the technical solutions of the present invention. In order to understand the technical means of the present invention more clearly and to practice in accordance with the disclosure, and in order to make the above and other objectives, features and advantages of the present invention clearer, specific embodiments of the present invention will be set forth below.

### BRIEF DESCRIPTION OF THE DRAWINGS

The drawings described here are used to provide a further understanding of the present application and constitute a part of the application. The exemplary embodiments and descriptions thereof in the application are to explain the application and do not constitute an improper limitation on the application. In the drawings:
Figure 1A is a schematic diagram of the working principle of an embodiment of a goods picking system in a warehousing environment;
Figure 1B is a schematic diagram of a first self-driven mobile device provided in the disclosure;
Figure 1C is a schematic diagram of a shelf provided in the disclosure;
Figure 1D is a schematic diagram of a seeding wall provided in the disclosure;
Figure 2A is a schematic working principle diagram of an embodiment of an automatic package sorting system in a warehousing environment;
Figure 2B is a schematic diagram of a second self-driven mobile device provided in the disclosure;
Figure 2C is a schematic diagram of a second self-driven mobile device provided in the disclosure;
Figure 3 is a schematic flowchart of goods processing provided in the disclosure; and
Figure 4 is a schematic diagram showing goods transportation performed by a goods processing system provided in the disclosure.

### DESCRIPTION OF EMBODIMENTS

In order to make the purpose, technical solution and advantages of the disclosure clearer, the technical solution of the disclosure will be clearly and completely described below in conjunction with specific embodiments of the disclosure and corresponding drawings. Obviously, the described embodiments are only a part of the embodiments of the present application, rather than all the embodiments. Any other embodiments obtained by those of ordinary skills in the art based on the embodiments in the disclosure without creative work shall fall within the scope of the present application.

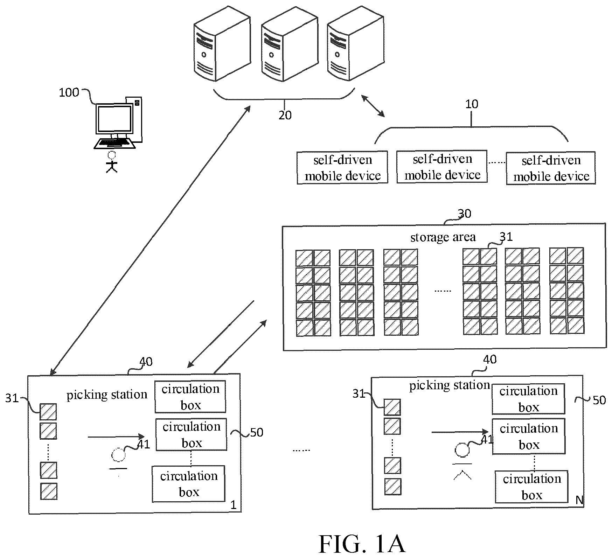

Referring to Figure 1A, Figure 1A is a schematic working principle diagram of an embodiment of a goods picking system in a warehousing environment. The goods picking system includes: first self-driven mobile devices 10, remotely located controllers 20, a storage area 30, and picking stations 40. The storage area 30 contains a plurality of shelves or shelf-like storage brackets 31 with various storage goods being placed on the storage brackets 31, or storage containers are provided on the storage brackets 31 and various storage goods are accommodated in the storage containers. Multiple storage brackets 31 form a group, and different groups are arranged in an array.

The controllers 20 are operated by staff through a console 100. The controllers 20 communicate with the self-driven mobile devices 10 wirelessly, and the first self-driven mobile devices 10 perform transfer tasks under the control of the controllers 20. For example, the controller 20 selects, according to storage information, a storage bracket or a storage container on the storage bracket for an order, where the storage bracket or the storage container on the storage bracket has goods of the order stored therein. In addition, the controller 20 further selects a picking station and a first self-driven mobile device for the order, and plans a navigation path from an original position to the picking station for the first self-driven mobile device. The first self-driven mobile device, following the navigation path, travels in clear spaces in the array of the storage brackets (a part of the passageway of the first self-driven mobile device 10). In order to facilitate the planning of the navigation path for the first self-driven mobile device 10, a working area of the first self-driven mobile device (the working area includes at least the storage area 30 and the area where the picking station 40 is located) can be divided into several sub-areas (i.e., cells) in advance. The first self-driven mobile device 10 moves among the sub-areas one by one to form a movement track.

The compartments on the storage bracket 31 can be provided with storage containers such as bins or pallets. The bins can accommodate unpacked storage items (such as cans of cola), and the pallets can accommodate grouped storage items (such as cases of cola). The first self-driven mobile device 10 can transfer the entire storage bracket 31 to the picking station 40 for goods picking, or can take storage containers (such as bins or pallets) on the storage bracket 31 and transfer the storage containers to the picking station 40 for goods picking. Of course, the storage bracket 31 can carry bins, pallets or other types of storage containers in other ways, all of which fall within the scope of the present application.

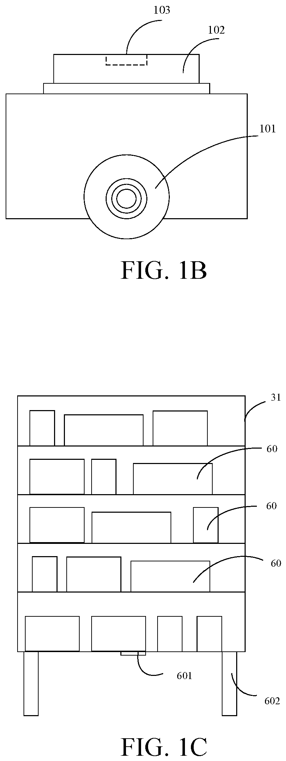

Referring to Figure 1B, taking the first self-driven mobile device 10 to transfer a shelf as an example, the first self-driven mobile device 10 may include a driving mechanism 101 through which the first self-driven mobile device 10 can move in the working space. The first self-driven mobile device 10 may further include a lifting mechanism 102 for transferring the shelf. The first self-driven mobile device 10 can move to the underneath of the shelf, lift the shelf with the lifting mechanism 102, and transfer the shelf to the assigned picking station 40. When the lifting mechanism 102 is raised, the entire shelf is raised from the ground, so that the first self-driven mobile device 10 carries the shelf; and when the lifting mechanism 102 is lowered, the shelf is placed on the ground. A target recognition assembly 103 (e.g., a camera) on the first self-driven mobile device 10 can effectively recognize the shelf when the first self-driven mobile device 10 lifts the shelf.

In addition, in a case that the navigation is based on visual markers, the first self-driven mobile device 10 further includes a navigation recognition assembly (not shown in FIG. 1B) for recognizing markers (such as two-dimensional codes) on the ground. In addition to the visual mark navigation, the first self-driven mobile device 10 can alternatively use other navigation methods, such as inertial navigation, Simultaneous Localization and Mapping (SLAM) navigation, etc., and can combine two or more navigation methods, such as two-dimensional code navigation plus inertial navigation, SLAM navigation plus two-dimensional code navigation, etc. Of course, the first self-driven mobile device 10 further includes a control module (not shown in FIG. 1B) that controls the first self-driven mobile device 10 to implement functions such as movement and navigation.

In one example, the first self-driven mobile device 10 includes at least two cameras facing upward and downward respectively. The first self-driven mobile device 10 may travel according to information of the two dimensional code markers (or other markers on the ground) captured by the camera facing downward, and may travel to the underneath of the shelf indicated by the controller 20 according to the navigation path determined by the controller 20. As shown in Fig. 1C, which is a schematic diagram of a shelf provided in the disclosure, goods 60 can be stored directly on the shelf 31, or the goods 60 can be stored in a storage container such as a bin or a pallet. In a specific embodiment, the shelf 31 includes a plurality of compartments stacked in a vertical direction, and each compartment can accommodate a plurality of goods 60. There is a two dimensional code mark 601 at the center of the bottom of the shelf 31. In the case that the first self-driven mobile device 10 travels to the underneath of the shelf 31, the two-dimensional code mark 601 is correctly captured by the camera facing upward to ensure that the first self-driven mobile device 10 is located exactly underneath the shelf 31 and can lift and transfer the shelf 31 steadily. The shelf 31 includes one or more supporting parts 602. In addition, in a specific embodiment, the goods 60 can be hung from hooks or rods in or on the shelf 31. The goods 60 on the shelf 31 can be placed in the shelf 31 or on an outer surface of the shelf 31 in any suitable manner.

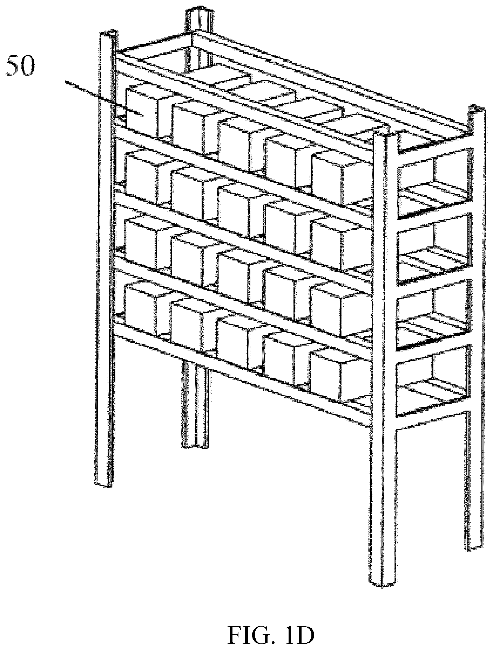

After the first self-driven mobile device 10 transfers the shelf 31 to the picking station 40, the staff 41 or automated equipment (such as a robotic arm) for performing the picking operation at the picking station 40 picks goods from the shelf 31 and places the goods into a turnover box on the seeding wall for subsequent operations, such as packing, as shown in FIG. 1D.

The above is the picking in the order processing process in the warehouse. After the picking is completed, the packed packs need to be sorted and finally shipped by express.

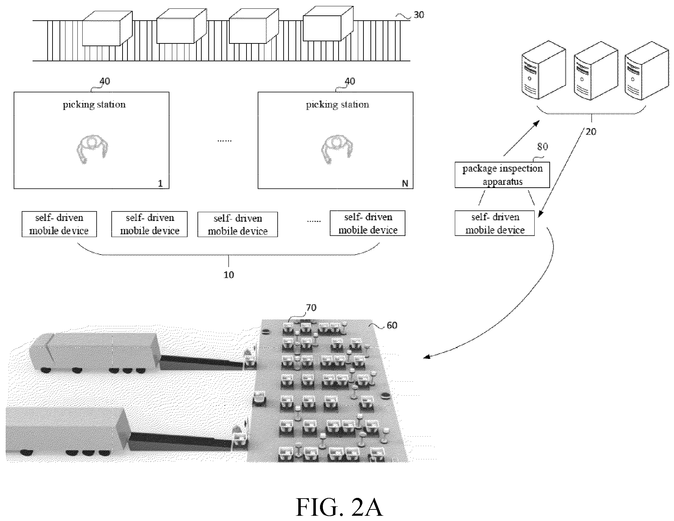

Referring to Figure 2A, Figure 2A is a schematic working principle diagram of an embodiment of an automatic package sorting system in a warehousing environment. The automatic package sorting system includes: second self-driven mobile devices 10, remotely located controllers 20, infeed stations 30, picking station 40, and a package collection area 60. The package collection area 60 contains multiple collection containers 70. Each collection container 70 can be bound to a delivery destination, and all packages of the same delivery destination are sorted into a same collection container 70. The collection containers 70 are distributed in the package collection area 60 in a certain layout, for example, several collection containers 70 form a group, and different groups are arranged in an array. The collection container 70 may be a commonly used container for storing goods to be delivered, such as a common cage truck. The packages are fed by the infeed station 30. The controller 20 assigns the second self-driven mobile devices 10 for the packages. The picking station 40 are arranged next to the infeed stations 30. At the picking station 40, a package is placed on a carrier assembly of a second self-driven mobile device 10 assigned to the package in a manner that an express sheet faces upward. The second self-driven mobile device 10 carries the package through a package inspection apparatus 80 located at the picking station 40. The package inspection apparatus 80 includes a package information acquisition apparatus. The package information acquisition apparatus can acquire express sheet information on all packages that pass through. The express sheet information includes package information, and the package information includes, but not limited to, the delivery destination information of the package (in other words, the destination address to deliver the package). The package information acquisition apparatus reports the acquired delivery destination information of the package to the controller 20. The controller 20 assigns, according to the delivery destination information of the package, the collection container 70 with the same delivery destination, and planes, according to a location of the collection container 70, a navigation path for the second self-driven mobile device 10. The second self-driven mobile device 10 carrying the package travels in empty space in the array of the collection containers (a part of the passageway of the second self-driven mobile device 70) to the corresponding collection container 70, and all the packages within the same collection container 70 are sent to a same destination (for example, a same store or same geographic area). In order to facilitate the planning of the navigation path for the second self-driven mobile device 10, a working area of the second self-driven mobile device 10 (the working area includes at least the package collection area and the area where the picking stations located) can be divided into several sub-areas (i.e., cells) in advance. The second self-driven mobile device 10 moves among the sub-areas one by one to form a movement track.

The second self-driven mobile device 10 can travel on an overhead platform (such as a steel platform) or a track, and the collection container 70 for receiving packages is located under the platform or the track; the second self-driven mobile device 10 can alternatively travel on the ground, and the collection container 70 for connecting the packages is also located on the ground. The height of the carrier assembly on the second self-driven mobile device 10 is slightly higher than the height of the collection container 70, so that the carrier assembly can put the packages into the collection container 70.

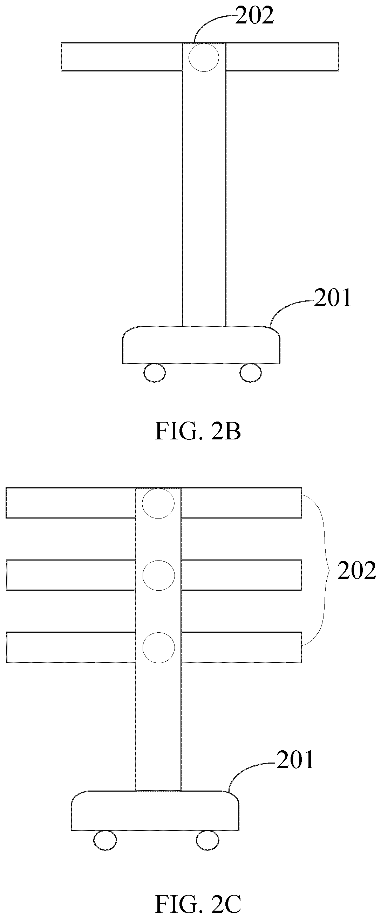

Referring to Figure 2B, taking the case of the second self-driven mobile device traveling on the ground as an example, the second self-driven mobile device may include a driving mechanism 201 through which the second self-driven mobile device can move in the working space. The second self-driven mobile device can further include a carrier assembly 202 for carrying and delivering packages. The second self-driven mobile device can use the carrier assembly 202 to carry the package, and also can use the carrier assembly 202 to drop the packages into the collection container 70 after moving to the collection container 70. The carrier assembly 202 may be any braking mechanism capable of carrying and delivering packages, for example, including but not limited to: a roller mechanism, a belt mechanism, a flap mechanism, and the like. The second self-driven mobile device may be provided with one carrier assembly or multiple carrier assemblies. As shown in FIG. 2C, each carrier assembly separately carries one package. As shown in FIG. 2C, the multiple carrier assemblies may be distributed vertically, or may be distributed horizontally in other embodiments, which is not limited in the disclosure.

In addition, in a case that the navigation is based on visual markers, the second self-driven mobile device 10 further includes a navigation recognition assembly (not shown in FIG. 2B) for recognizing markers (such as two-dimensional codes) on the ground. In addition to visual marker navigation, the second self-driven mobile device 10 can alternatively use other navigation methods, such as inertial navigation, SLAM navigation, etc., and can combine two or more navigation methods, such as two dimensional code navigation plus inertial navigation, SLAM navigation plus two-dimensional code navigation, etc. Of course, the second self-driven mobile device 10 further includes a control module (not shown in FIG. 2B) that controls the entire second self-driven mobile device to implement functions such as movement and navigation.

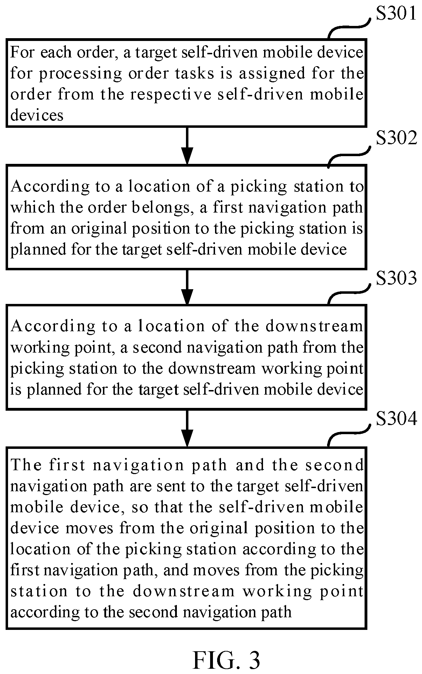

Figure 3 is a schematic flowchart of goods processing provided in the disclosure, which specifically includes the following steps.

S301: For each order, a target self-driven mobile device for processing order tasks is assigned for the order from the respective self-driven mobile devices.

S302: According to a location of a picking station to which the order belongs, a first navigation path from an original position to the picking station is planned for the target self-driven mobile device.

In the disclosure, the goods processing system includes a controller and at least one self-driven mobile device that communicates wirelessly with the controller. The controller is configured to send a transferring instruction to the self-driven mobile device so that the self-driven mobile device delivers the carried storage goods to a downstream working point according to the received transferring instruction. In the embodiments of the disclosure, the downstream working point may be in any form, for example, a workstation or a large workshop, which is not limited in the disclosure. The controller can be a device in the form of a computer or a server. The self-driven mobile device mentioned here can refer to an automated device such as AGV and transferring robot.

The storage goods carried on the self-driven mobile device can be manually taken out of the warehouse where various goods are stored and placed on the self-driven mobile device. Of course, in practical applications, the self-driven mobile device can be used for goods transferring in both the picking process and the sorting process. The self-driven mobile device used in the picking process can be called the picking device, and the self-driven mobile device used in the sorting process is called sorting device. The picking device can take out the storage goods that need to be packed from the warehouse storing various goods according to the transferring instructions sent by the controller; then the storage goods carried on the picking device can be moved to the sorting device; and subsequently, the sorting device delivers the carried storage goods to the downstream working point(s).

The self-driven mobile device can be provided with multiple carrier assemblies, and the carrier assemblies can be configured to carry storage goods that need to be transported. The carrier assembly can be in various forms. For example, the carrier assembly can be a carrier platform, a container that can accommodate goods, or a drawer that can accommodate goods. The disclosure does not limit the specific form of the carrier assembly.

In the disclosure, the controller can select, for each order, a self-driven mobile device from the self-driven mobile devices to execute order tasks of the order. The orders mentioned here can be divided into two categories. One type of order refers to an order that involves multiple types of storage goods (that is, a user purchases multiple types of products in one order), and this kind of order can be called multi-product order. The other type of order refers to an order involving a single type of storage goods (that is, a user purchases a single type of goods in one order), and this kind of order can be called a single-product order.

For a multi-product order, the storage goods in the multi-product order contain at least two Stock Keeping Units (SKUs), that is, each type of storage goods corresponds to a unique SKU. Therefore, the multi-product order actually contains SKUs of multiple types of storage goods. If the self-driven mobile device is provided with a plurality of carrier assemblies capable of carrying storage goods and the carrier space of the plurality of carrier assemblies can accommodate all the storage goods in the multi-product order, the controller may assign one self-driven mobile device for the multi-product order. In other words, in a case that the carrier assemblies on the self-driven mobile device can carry all the storage goods in the multi-product order, the controller can assign one self-driven mobile device to perform the order task(s) for the multi-product order.

In a case that a self-driven mobile device is provided with one carrier assembly having a carrying space capable of accommodating all the storage goods in the multi-product order, the controller assigns one target self-driven mobile device for the multi-product order.

In practical applications, in a case that a target self-driven mobile device carries all the goods of a multi-product order, the controller can control the target self-driven mobile device to directly move to the packing station for packing.

Specifically, for a target self-driven mobile device that carries all the goods of a multi-product order, the controller may obtain a current location of the self-driven mobile device as an original position of the self-driven mobile device. Then, the controller can plan a navigation path for the self-driven mobile device from the original position to the packing station according to the original position of the self-driven mobile device and the location of the packing station, and send the navigation path to the self-driven mobile device. The self-driven mobile device can move from the original position to the packing station according to the navigation path.

In a case that one carrier assembly is provided on the self-driven mobile device, or multiple carrier assemblies are provided on the self-driven mobile device, and in a case that the carrying space of the one or more carrier assemblies cannot accommodate all the storage goods in the multi-product order, the controller can assign multiple self-driven mobile devices for the multi-product order. That is to say, in a case that the carrier assembly provided on the self-driven mobile device is inadequate to carry all the storage goods in the multi-product order, the controller needs to assign multiple self-driven mobile devices to execute the order tasks for the multi-product order.

For a single-product order, the storage goods in the single-product order contain one SKU, that is, the single-product order contains only one type of storage goods. Since the single-product order only contains one kind of storage goods, the controller can allocate one self-driven mobile device for the single-product order to execute corresponding order tasks for the single-product order.

There are two situations in which the controller assigns a self-driven mobile device for the single-product order. One situation is that the self-driven mobile device assigned by the controller for the single-product order is only used to execute the order task of the single-product order. That is, when the self-driven mobile device carries the storage goods in the single-product order, the self-driven mobile device will not carry storage goods of other single-product orders or multi-product orders. The other situation is that the self-driven mobile device assigned by the controller to the single-product order may execute not only the order task of the single-product order, but also the order tasks of other single-product orders or multi-product orders; that is, while carrying the storage goods in the single-product order, the self-driven mobile device can also carry the storage goods of other single-product orders or multi-product orders.

It should be noted that for each carrier assembly provided on the self-driven mobile device, the carrier assembly can only carry storage goods for one order, and further, the carrier assembly can only carry one type of storage goods for one order.

In the disclosure, the controller assigning self-driven mobile devices to each order can also refer to assigning self-driven mobile devices to a batch of orders. In other words, for a batch of orders, the controller can assign several self-driven mobile devices for this batch of orders all at once, and instruct these self-driven mobile devices to move to locations of the picking stations. It should be noted that at this time, the controller does not assign specific self-driven mobile devices to each order one by one, and the controller only instructs these self-driven mobile devices to move to the picking stations. The correspondence relationships between respective orders and the respective self-driven mobile devices need to be confirmed at the picking stations.

Specifically, for each self-driven mobile device, the controller may obtain a current location of the self-driven mobile device as an original position of the self-driven mobile device. Then, the controller can plan a first navigation path for the self-driven mobile device to move from the original position to the picking station according to the original position of the self-driven mobile device and the location of the picking station, and send the first navigation path to the self-driven mobile device. The self-driven mobile device can move from the original position to the picking station according to the first navigation path. Since the original positions of the respective self-driven mobile devices are not the exactly same, the first navigation paths planned by the controller for the respective self-driven mobile devices are not exactly the same.

In the case that the self-driven mobile devices move to the picking stations according to the first navigation paths, the controller can obtain identification information of the self-driven mobile devices and identification information of the storage goods carried on the self-driven mobile devices, and then use the obtained identification information to determine what kind of storage goods are carried on the respective self-driven mobile devices; and in the subsequent process, the delivery of the storage goods is performed at downstream working points according to the correspondence between the orders and the storage goods.

In the disclosure, a scanning device is further provided in the goods processing system, and the scanning device can be set at the picking station. In the case that the self-driven mobile device moves to the picking station, the scanning device can scan the identification information of the self-driven mobile device and the identification information of the storage goods carried on the self-driven mobile device, and can send the scanned identification information to the controller. The staff can hold the scanning device to perform the scanning of the self-driven mobile device and the storage goods carried on the self-driven mobile device. Of course, the scanning device can be alternatively set at a designated location at the picking station. In the case that the self-driven mobile device determines that the storage goods have been loaded, the self-driven mobile device can go to the designated location, and the scanning device located at the designated location can automatically scan the self-driven mobile device of the self-driven mobile device and the identification information of the storage goods carried on the self-driven mobile device, and then the scanned identification information is sent to the controller.

Specifically, the scanning device may be composed of a trigger, a first scanning apparatus, and a second scanning apparatus. In the case that the trigger detects that the self-driven mobile device has arrived at a preset scanning area, the trigger can send a scanning instruction to the first scanning apparatus and the second scanning apparatus. According to the received scanning instruction, the first scanning apparatus can scan the identification information of the self-driven mobile device and send the identification information to the controller. At the same time, the second scanning apparatus can scan the identification information of the storage goods carried on the self-driven mobile device according to the received scanning instruction, and send the identification information to the controller. The controller may determine the identification information sent by the first scanning apparatus as the identification information of the self-driven mobile device currently passing through the scanning area, and the identification information sent by the second scanning apparatus as the identification information of the storage goods carried on the self-driven mobile device currently passing through the scanning area.

The identification information of the self-driven mobile device mentioned above is used to uniquely identify the self-driven mobile device, and the identification information may be information in the form of a two-dimensional code, a barcode, and the like. The identification information of the storage goods carried by the self-driven mobile device is used to uniquely identify a same type of storage goods, and the identification information may refer to the European Article Number (EAN), the SKU, and the like.

It should be noted that the location information of the scanning area may be sent by the controller to the self-driven mobile device (the controller may send the location information to the self-driven mobile device in the case that the controller determines that the self-driven mobile device arrives at the picking station; alternatively the controller may send the location information together with the first navigation path to the self-driven mobile device; or alternatively the controller may send the location information to the self-driven mobile device in the case that the self-driven mobile device has finished loading of the storage goods); or the location information is pre-stored in the self-driven mobile device.

In the disclosure, in the case that the self-driven mobile device moves to the picking station, the staff at the picking station can place the storage goods of the order onto the carrier assembly of the self-driven mobile device. Of course, the picking station can also be equipped with an automatic picking device (such as a picking robotic arm, etc.), which can automatically place the storage goods of the order onto the carrier assembly of the self-driven mobile device.

The controller stores correspondence relationships between the orders and the goods, and the correspondence relationships indicate which storage goods are required for respective orders. In the disclosure, the correspondence relationships may be pre-determined and stored by the controller according to the order information of respective orders. Of course, in the case that the controller queries the orders to which the storage goods carried on the self-driven mobile device belong, the controller can query the correspondence relationships from the order information of the orders.

On this basis, after the controller obtains the identification information of the self-driven mobile device and the identification information of the storage goods carried on the self-driven mobile device, the controller may determine an order to which the storage goods carried on the self-driven mobile device correspond, according to the stored correspondence relationship between the order and the goods. In the subsequent process, it is further determined which position of the downstream working point that the self-driven mobile device needs to deliver the storage goods carried thereon to for further delivery.

S303: According to a location of the downstream working point, a second navigation path from the picking station to the downstream working point is planned for the target self-driven mobile device.

In the case that it is determined that the self-driven mobile device has loaded all the storage goods that need to be transported, the controller can plan the second navigation path for the target self-driven mobile device from the picking station to the downstream working point according to the location of the downstream working point.

There may be many specific ways to determine that the self-driven mobile device has loaded all the storage goods that need to be transported. For example, in the case that the staff at the picking station determines that all the storage goods that need to be transported by the self-driven mobile device have been placed on the carrier assembly of the self-driven mobile device, the staff can send a confirmation message to the self-driven mobile device or the controller. In this way, the self-driven mobile device or the controller can determine according to the confirmation message that the self-driven mobile device has loaded all the storage goods that need to be transported. For another example, in the case that the self-driven mobile device only carries the storage goods of a single-product order, it can be determined that the self-driven mobile device has loaded all the storage goods that need to be transported in the case that the self-driven mobile device detects that a carrier assembly provided thereon is loaded with the storage goods. For another example, in the case that the self-driven mobile device detects that all the carrier assemblies provided thereon are occupied, it can be determined that the self-driven mobile device has loaded all the storage goods that need to be transported.

In the disclosure, multiple order containers are provided at the downstream working point, and each order container can correspond to one order. That is, one order container is configured to hold storage goods of one order. The order mentioned here can refer to the above-mentioned multi-product order or a single-product order. Therefore, the storage goods hold in an order container can belong to a single-product order or a multi-product order.

Since the positions of these order containers are not exactly the same at the downstream working point, the second navigation paths planned by the controller for respective self-driven mobile devices are not exactly the same. It should be noted that, if the self-driven mobile device carries storage goods for only one order, the second navigation path planned by the controller for the self-driven mobile device should include only one path. If the self-driven mobile device carries storage goods for multiple orders, the second navigation path planned by the controller the self-driven mobile device should include multiple paths, that is, the self-driven mobile device can sequentially go to the locations of respective order containers at the downstream working point for goods delivery according to the multiple paths of the second navigation path.

S304: The first navigation path and the second navigation path are sent to the target self-driven mobile device, so that the self-driven mobile device moves from the original position to the location of the picking station according to the first navigation path, and moves from the picking station to the downstream working point according to the second navigation path.

After the controller plans the first navigation path for the target self-driven mobile device, the controller can send the first navigation path to the target self-driven mobile device, so that the target self-driven mobile device can move from its original position to the location of the picking station. In the case that the target self-driven mobile device has loaded all the storage goods that need to be transported, the target self-driven mobile device can move to the downstream working point according to the second navigation path sent by the controller.

After the target self-driven mobile device moves to the downstream working point, the carried storage goods can be delivered through the carrier assembly to a target order container among the multiple order containers set at the downstream working point. The controller can assign an order container for processing order tasks as a target order container for each order at the downstream working point in advance. Since the controller records the correspondence relationships between the orders and the storage goods, after determining the storage goods carried on the target self-driven mobile device, it can be determined the order to which the storage goods carried on the target self-driven mobile device belong. On this basis, the navigation path planned by the controller for the target self-driven mobile device actually indicates the specific order container at the downstream working point to which the target self-driven mobile device should move from the picking station.

After the target self-driven mobile device moves to the target order container, the carrier assembly can be controlled to deliver the storage goods, which need to be delivered to the target order container, into the target order container. Specifically, after the controller determines the storage goods carried by the target self-driven mobile device through the scanning device, the controller further needs to record a correspondence relationship between the carrier assembly and the storage goods carried by the carrier assembly. In other words, the controller needs to determine for each carrier assembly of the target self-driven mobile device which storage goods the carrier assembly carries. In this way, the controller can determine, according to the correspondence relationship, how the target self-driven mobile device should control the carrier assembly to complete the delivery of the storage goods after the target self-driven mobile device moves to the corresponding target order container according to the second navigation path.

On this basis, after the target self-driven mobile device moves to the target order container, the controller can determine according to the location of the target self-driven mobile device whether the target self-driven mobile device has arrived at the target order container. In the case of determining that the target self-driven mobile device has arrived at the target order container, according to the predetermined correspondence relationships between respective orders and the storage goods, and the correspondence relationships between the carrier assemblies and the storage goods, a delivery instruction is sent to the target self-driven mobile device so that the target self-driven mobile device controls, according to the delivery instruction, the carrier assembly, which carries the storage goods to be delivered into the target order container, to deliver the goods into the target order container.

In the case that the target self-driven mobile device carries storage goods of multiple orders, the target self-driven mobile device may deliver the goods to respective target order containers according to multiple delivery instructions sent by the controller.

Of course, the controller can alternatively send the aforementioned correspondence relationships between the orders and the storage goods, as well as the correspondence relationships between the carrier assemblies and the storage goods, to the target self-driven mobile device, and accordingly, the target self-driven mobile device, after reaching the target order container, can determine, according to these correspondence relationships, which carrier assemblies need to be controlled to deliver goods to the target order container.

It can be seen from the above method that the self-driven mobile device can move to the picking station according to the first navigation path sent by the controller, and the storage goods stored at the picking station only need to be placed on the self-driven mobile device. The self-driven mobile device can move to the downstream working point according to the second navigation path sent by the controller, and deliver the carried storage goods to the corresponding order container. In this way, it is not only ensured the accurate delivery of storage goods into the corresponding order containers, but also effectively improving the efficiency of goods sorting.

It should be noted that after the target self-driven mobile device determines that the storage goods that have been carried and need to be delivered to the target order container are delivered to the target order container, the target self-driven mobile device may send a transportation completion message to the controller. Correspondingly, the controller can determine, according to the received transportation completion message, that the target self-driven mobile device has already delivered the storage goods, that have been carried and need to be delivered to the target order container, into the target order container.

Since the storage goods in a target order container may be carried by multiple self-driven mobile devices, in the case that the controller determines, according to the transportation completion message sent by multiple self-driven mobile devices, that all the storage goods that need to be delivered into the target order container have been delivered into the target order container, the controller may send a message for confirming to pack the storage goods in the target order container, so as to notify the staff at the packing station in the downstream working point to package the storage goods in the target order container, or to instruct the packing device at the packing station to package the storage goods in the target order container. At the same time, the controller can assign the target order container to the next batch of orders.

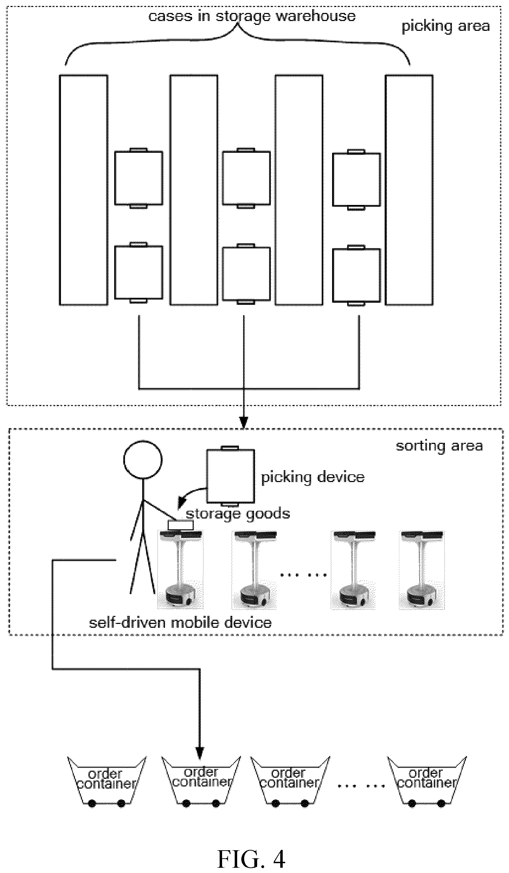

In order to further explain the entire process of goods transportation, the following will describe the goods processing method provided in the disclosure in conjunction with specific illustrations, as shown in Figure 4.

Figure 4 is a schematic diagram showing goods transportation performed by a goods processing system provided in the disclosure.

In Figure 4, two areas are passed during the entire process of goods processing, one is called the picking area, and the other is called the sorting area. After determining the orders, the controller can send transferring instructions to the picking devices for goods transferring in the picking area according to the storage goods involved in these orders. Correspondingly, the picking devices can take the storage goods that need to be transferred out of cases in the storage warehouse according to the transferring instructions sent by the controller. After taking out the storage goods, the picking devices can travel to the picking stations. The respective self-driven mobile devices can travel to the picking stations in turn according to the first navigation paths sent by the controller, and the staff at the picking stations can place various storage goods stored in the picking stations on respective self-driven mobile devices. For each self-driven mobile device, the staff can place a piece of storage goods on the self-driven mobile device.

The self-driven mobile device can carry the storage goods to a designated location provided with a scanning device, and the scanning device can scan the identification information of the self-driven mobile device that has arrived at the designated location (i.e., within a preset scanning area of the scanning device) and the identification information of the storage goods carried on the self-driven mobile device, and the scanned identification information is sent to the controller. The controller can plan a second navigation path for the self-driven mobile device to move to the downstream working point according to the acquired identification information and the aforementioned correspondence relationship, and send the second navigation path to the self-driven mobile device. The self-driven mobile device can follow the second navigation path to the downstream working point, and then deliver the storage goods carried thereon to the target order container set at the downstream working point for receiving the storage goods.

Through the above method, the process of picking and the process of sorting are seamlessly connected, the self-driven mobile device for sorting is controlled to queue at the picking station, and the picked goods are directly sorted onto the self-driven mobile device, saving intermediate handover process. In other words, feeding actions in picking and sorting are combined, which can greatly shorten the operational flow, thereby greatly improving the overall efficiency of the entire order packing from goods picking to goods sorting.

It should be noted that the specific path planning algorithm used by the controller to determine the first navigation path and the second navigation path can be a conventional algorithm, and the disclosure does not limit the specific algorithm used by the controller.

In the disclosure, the downstream working point can also be provided with multiple collection containers, and each collection container can be bound to a delivery destination. In other words, the storage goods in a same collection container should be sent to a same delivery destination. The delivery destinations corresponding to different collection containers may be different.

Since the order information of each order records a corresponding delivery destination, the controller can determine the delivery destination corresponding to the storage goods carried on the target self-driven mobile device according to the delivery destination recorded in the order information of the order. Subsequently, according to the delivery destinations assigned in advance for respective collection containers set at the downstream working point, the collection container to which the storage goods carried on the target self-driven mobile device should be delivered is determined as the target collection container. In other words, the delivery destination bound to the target collection container is consistent with the delivery destination of the order corresponding to the storage goods carried on the target self-driven mobile device.

In the disclosure, the target self-driven mobile device is provided with multiple carrier assemblies, and each carrier assembly can separately carry the storage goods of a single-product order. In this way, in the case that all the storage goods carried on the target self-driven mobile device need to be delivered to one collection container, the second navigation path planned by the controller for the target self-driven mobile device includes one navigation path. In the case that the storage goods carried on the target self-driven mobile device need to be delivered to several different collection containers, the second navigation path planned by the controller for the target self-driven mobile device includes multiple navigation paths.

It should be noted that the order container mentioned above is configured to hold the storage goods involved in a same order, while the collection container mentioned here is mainly configured to hold the same storage goods to be sent to a same delivery destination. Therefore, the storage goods hold in the collection container mentioned here are not necessarily all from a same order.

In the case that the storage goods carried by respective carrier assemblies on the target self-driven mobile device need to be delivered to multiple target collection containers, the target self-driven mobile device may, for each of the target collection containers, in response to moving to the target collection container, control a carrier assembly to deliver storage goods which need to be delivered into the target collection container, into the target collection container.

Specifically, after the controller identifies the storage goods carried by the target self-driven mobile device through the scanning device, the controller further needs to record, for each carrier assembly provided on the target self-driven mobile device, a correspondence relationship between the carrier assembly and the storage goods carried by the carrier assembly. In other words, the controller needs to determine for each carrier assembly of the target self-driven mobile device which storage goods the carrier assembly carries. In this way, the controller can determine, according to the correspondence relationship, how the target self-driven mobile device should control the carrier assembly to complete the delivery of the storage goods after the target self-driven mobile device moves to the corresponding target collection container according to the second navigation path.

On this basis, after the target self-driven mobile device moves to the target collection container, the controller can determine according to a location of the target self-driven mobile device that the target self-driven mobile device has arrived at the target collection container. Then, according to the predetermined correspondence relationships between the delivery destinations of respective orders and the storage goods, and the correspondence relationships between the carrier assemblies and the storage goods, a delivery instruction is sent to the target self-driven mobile device so that the target self-driven mobile device controls, according to the delivery instruction, the carrier assembly carrying the storage goods that need to be delivered into the target collection container, to deliver the goods into the target collection container.

Then, the target self-driven mobile device can go to a next target collection container according to the second navigation path sent by the controller, and control a corresponding carrier assembly to deliver storage goods which need to be delivered into the next target collection container, into the next target collection container.

Of course, the controller may alternatively send the correspondence relationships between the delivery destinations of respective orders and the storage goods, and the correspondence relationships between the carrier assemblies and the storage goods, to the target self-driven mobile device. Correspondingly, after moving to the target collection container, the target self-driven mobile device may, according to these correspondence relationships, determine which carrier assembly or assemblies need to be controlled to deliver goods to the target collection container.

It should be noted that after determining the order information of respective orders, the controller can directly determine and save the correspondence relationships of the storage goods, the delivery destinations and the collection containers according to the order information of these orders. Of course, the controller can alternatively first determine the correspondence relationships between the delivery destinations and the collection containers, and then further determine the correspondence relationships of the storage goods, the delivery destinations and the collection containers based on the correspondence relationships between the delivery destinations and the collection containers during the process of carrying the storage goods by the target self-driven mobile device.

For example, supposing that the controller determines based on the predetermined correspondence relationships between the delivery destinations and the collection containers that there are multiple collection containers corresponding to the delivery destination A, and none of these collection containers initially hold any storage goods. In the case that the controller determines that the delivery destination corresponding to the storage goods "a" carried on a target self-driven mobile device is the delivery destination A, the controller can randomly select one of these container containers to hold the storage goods "a". Once the collection container for holding storage goods "a" is determined, the collection container is only used for holding storage goods "a" (the storage goods "a" used here does not refer to a piece of storage goods but a type of storage goods). In the same way, in the case that the controller determines that the delivery destination corresponding to the storage goods "b" carried on a target self-driven mobile device is also delivery destination A, the controller can select, from the remaining collection containers corresponding to the delivery destination A, one collection container to hold the storage goods "b", and once being selected, the collection container is only used to hold the storage goods "b". By analogy, the controller can sequentially determine the storage goods that each container needs to hold. That is, in the process of the target self-driven mobile device transporting the storage goods, the correspondence relationships among the storage goods, the delivery destinations and the collection containers are determined.

After delivering the storage goods, the target self-driven mobile device can send a transportation completion message to the controller, and the controller can determine, according to the transportation completion messages sent by the respective self-driven mobile devices, the collection containers for which all the required storage goods have been delivered, and consequently a packing message is sent to the staff at the packing station in the downstream working point accordingly. According to the packing message, the staff can perform operations such as pasting order information on the same storage goods contained in the collection containers, thereby completing the packing of the storage goods and sending the storage goods to the corresponding delivery destinations.

Since one collection container can hold the same storage goods, in response to pasting the order information of the storage goods carried in the collection container, the staff can directly paste the printed order information on the storage goods or on outer package of the storage goods, which can greatly improve the packing efficiency. Furthermore, in addition to packing the storage goods in the collection container manually by the staff, preset packing devices may be used for automatic packing. In other words, the packing devices may paste the printed order information on the storage goods or on outer package of the storage goods.

In the disclosure, the controller can determine whether a quantity of the storage goods carried by the target collection container has reached a specified quantity according to the received message of completion of delivery. In the case that the specified quantity has been reached, the above-mentioned packing message may be sent, otherwise, it is determined that the target collection container is not full of storage goods.

Of course, for each collection container, the collection container can be further provided with a pressure sensor, and in the case that the pressure sensor detects that a total weight of the storage goods hold in the collection container has reached a preset weight, a message may be sent to the controller. Based on the message, the controller can determine that the staff needs to pack the storage goods in the collection container in time, and then send a packing and delivering message to the staff so that the staff can pack the storage goods in the collection container and send the packed storage goods to the delivery destination corresponding to the collection container.

The embodiment of the present invention further provides a computer-readable storage medium on which a computer program is stored, and when the program is executed by a processor, any of the aforementioned goods processing methods is implemented.

It should also be noted that the terms "include", "comprise" or any other variants thereof are intended to cover non-exclusive inclusion, so that a process, method, commodity or equipment including a series of elements not only includes those elements, but further includes other elements that are not explicitly listed, or further includes elements inherent to such process, method, commodity or equipment. Unless otherwise limited, the expression "including a..." for defining an element does not exclude the existence of other identical elements in the process, method, commodity, or equipment that includes the element.

The various embodiments in the disclosure are described in a progressive manner, the same or similar parts in the various embodiments can be referred to each other, and each embodiment focuses on the differences from other embodiments. In particular, as for the system embodiment, since it is basically similar to the method embodiment, the description is relatively simple, and for related parts, reference may be made to the description of the method embodiment.

The above are only embodiments of the present application, and are not intended to limit the present application. For those skilled in the art, there can be various modifications and changes. Any modification, equivalent, improvement, etc. made within the spirit and principle of the disclosure shall fall within the scope of the claims of the disclosure.

## Claims

1. A goods processing system, **characterized in** comprising a controller and at least one self-driven mobile device configured for wirelessly communicating with the controller, the self-driven mobile device being provided with at least one carrier assembly;
the self-driven mobile device being configured to move, according to a first navigation path planned by the controller, to a picking station to which an order task belongs; to carry, through the carrier assembly, storage goods picked from a storage container by a picking party; and to transport the storage goods from the picking station to a downstream working point according to a second navigation path planned by the controller; and
the controller being configured to assign for an order a self-driven mobile device for processing the order task as a target self-driven mobile device; to plan, for the target self-driven mobile device, the first navigation path from an original position of the target self-driven mobile device to the picking station, according to a location of the picking station to which the order belongs; to plan, for the target self-driven mobile device, the second navigation path from the picking station to the downstream working point according to a location of the downstream working point; and to send the first navigation path and the second navigation path to the target self-driven mobile device.

2. The goods processing system according to claim 1, **characterized in that** the order is a multi-product order, and the storage goods in the multi-product order comprise at least two Stock Keeping Units SKUs.

3. The goods processing system according to claim 2, **characterized in that** one or more carrier assemblies are provided on the self-driven mobile device.

4. The goods processing system according to claim 3, **characterized in that** if a carrying space of the one or more carrier assemblies on the self-driven mobile device is capable of accommodating all storage goods in the multi-product order, the controller is configured to assign one target self-driven mobile device for the multi-product order.

5. The goods processing system according to claim 3, **characterized in that** if a carrying space of the one or more carrier assemblies on the self-driven mobile device is not capable of accommodating all storage goods in the multi-product order, the controller is configured to assign a plurality of target self-driven mobile devices for the multi-product order.

6. The goods processing system according to claim 4 or 5, **characterized in that** the downstream working point is provided with a plurality of order containers, and one order container corresponds to one order;
the self-driven mobile device is further configured to deliver, through the carrier assembly, the carried storage goods into a target order container among the plurality of order containers;
the controller is further configured to assign for the order an order container for processing the order task as the target order container; and
the second navigation path is a navigation path for the target self-driven mobile device to move from the picking station to the target order container.

7. The goods processing system according to claim 1, **characterized in that** the order is a single-product order, and the storage goods in the single-product order correspond to only one SKU.

8. The goods processing system according to claim 4 or 7, **characterized in that** the downstream working point comprises a packing station.

9. The goods processing system according to claim 7, **characterized in that** the downstream working point is provided with a plurality of collection containers, and one collection container is bound to one delivery destination;
the self-driven mobile device is further configured to deliver, through the carrier assembly, the carried storage goods to a target collection container among the plurality of collection containers;
the controller is further configured to assign for the order a collection container having a delivery destination consistent with delivery information of the order, as the target collection container; and
the second navigation path is a navigation path for the target self-driven mobile device to move from the picking station to the target collection container.

10. The goods processing system according to any one of claims 7-9, **characterized in that** the target self-driven mobile device is provided with a plurality of carrier assemblies, and each of the plurality of carrier assemblies carries storage goods of a single-product order.

11. The goods processing system according to claim 6, **characterized in that** the target self-driven mobile device is further configured to send a transportation completion message to the controller in response to determining that the transported storage goods have been delivered to the target order container; and
the controller is further configured to: according to the transportation completion message sent by the target self-driven mobile device, determine that the target self-driven mobile device has delivered the transported storage goods to the target order container; and send a message for confirming to pack the storage goods in the target order container in response to determining, according to the received transportation completion message, that all the storage goods in the order have been transported into the target order container through at least one self-driven mobile device.

12. The goods processing system according to claim 9, **characterized in that** the target self-driven mobile device is further configured to send a transportation completion message to the controller in response to determining that the transported storage goods have been delivered to the target collection container; and
the controller is further configured to: according to the transportation completion message sent by the target self-driven mobile device, determine that the target self-driven mobile device has delivered the transported storage goods to the target collection container; and send a message for confirming to pack the storage goods in the target collection container in response to determining, according to the received transportation completion message, that a quantity of the storage goods carried in the target collection container has reached a specified quantity.

13. A goods processing method, **characterized in** comprising:
assigning, for each order, a self-driven mobile device for processing an order task from respective self-driven mobile devices, as a target self-driven mobile device;
planning, for the target self-driven mobile device, a first navigation path from an original position of the target self-driven mobile device to a picking station to which the order belongs, according to a location of the picking station;
planning, for the target self-driven mobile device, a second navigation path from the picking station to a downstream working point according to a location of the downstream working point; and
sending the first navigation path and the second navigation path to the target self-driven mobile device, so that the target self-driven mobile device moves, according to the first navigation path, from the original position to the location where the picking station is located, and moves from the picking station to the downstream working point according to the second navigation path.

14. The goods processing method according to claim 13, **characterized in that**, the assigning, for each order, a self-driven mobile device for processing an order task from respective self-driven mobile devices, as a target self-driven mobile device, comprises:
for each order, determining the self-driven mobile device that carries storage goods of the order at the picking station as the target self-driven mobile device, and recording a correspondence relationship between identification information of the target self-driven mobile device and identification information of the storage goods of the order.

15. The goods processing method according to claim 14, **characterized in that** the downstream working point is provided with a plurality of order containers, and one order container corresponds to one order;
the planning, for the target self-driven mobile device, a second navigation path from the picking station to a downstream working point according to a location of the downstream working point, comprises:
determining at the downstream working point, according to the correspondence relationship, an order container to which the storage goods carried on the target self-driven mobile device need to be delivered, as a target order container; and
planning, for the target self-driven mobile device, the second navigation path from the picking station to the target order container at the downstream working point according to a location where the target order container is located at the downstream working point.

16. The goods processing method according to claim 14, **characterized in that** the downstream working point is provided with a plurality of collection containers, and one collection container is bound to a delivery destination;
the planning, for the target self-driven mobile device, a second navigation path from the picking station to a downstream working point according to a location of the downstream working point, comprises:
determining, according to the correspondence relationship, order information of the order to which the storage goods carried on the target self-driven mobile device corresponds;
determining at the downstream working point, according to a delivery destination recorded in the order information, a collection container to which the storage goods carried on the target self-driven mobile device need to be delivered, as a target collection container; and
planning, for the target self-driven mobile device, the second navigation path from the picking station to the target collection container at the downstream working point according to a location where the target collection container is located at the downstream working point.
